# EUROPÄISCHE PATENTSCHRIFT

(11) **EP 4 311 601 B1**
(45) Veröffentlichungstag und Bekanntmachung des Hinweises auf die Patenterteilung: **04.12.2024**
(21) Anmeldenummer: 23182440.0
(22) Anmeldetag: 29.06.2023
(51) Int. Cl.: B02C 1/02, B02C 13/31, B02C 23/04, F16K 17/08

(54) **BRECHER FÜR MINERALISCHE WERKSTOFFE ODER RECYCLINGWERKSTOFFE**
CRUSHER FOR MINERAL MATERIALS OR RECYCLED MATERIALS
CONCASSEUR POUR MATÉRIAUX MINÉRAUX OU MATÉRIAUX RECYCLÉS

(30) Priorität: 29.07.2022 DE 102022119153
(43) Veröffentlichungstag der Anmeldung: 31.01.2024
(73) Patentinhaber: KLEEMANN GMBH, 73037 Göppingen (DE)
(72) Erfinder: KRAUSS, Till, 73098 Rechberghausen (DE)
(74) Vertreter: Herrmann, Jochen

(56) Entgegenhaltungen:
- EP-B1- 2 888 049
- CN-U- 202 778 572
- DE-A1- 102017 002 079
- DE-A1- 102020 114 106

## Beschreibung

Die Erfindung betrifft einen Brecher für mineralische Werkstoffe oder Recyclingwerkstoffe, insbesondere einen Rotationsprallbrecher oder einen Backenbrecher, mit einem Brechaggregat, das einen beweglichen ersten Brechkörper, insbesondere einen Rotor oder eine Brechbacke aufweist, wobei dem ersten Brechkörper ein zweiter Brechkörper, insbesondere eine Prallschwinge oder eine Brechbacke zugeordnet ist, wobei zwischen den Brechkörpern ein Brechspalt gebildet ist, wobei mit dem ersten oder dem zweiten Brechkörper eine bewegbare Baugruppe einer Überlast-Auslöseeinrichtung gekoppelt ist, wobei die bewegbare Baugruppe einen Hydraulikzylinder oder einen in einem Hydraulikzylinder geführten Kolben aufweist, wobei die bewegbare Baugruppe dazu ausgebildet ist, in einer Ausweichbewegung eine die Breite des Brechspalts vergrößernde Bewegung des angekoppelten Brechkörpers zuzulassen, wobei in dem Hydraulikzylinder ein Druckraum ausgebildet ist, der mittels des Kolbens begrenzt ist, und wobei die Überlast-Auslöseeinrichtung ein Ventil aufweist, das in seiner Öffnungsstellung eine fluidleitende Verbindung zwischen dem Druckraum und einem Ausgleichsbereich schafft und in der geschlossenen Ventilstellung diese Verbindung sperrt.

Bei diesen erfindungsgemäßen Brechern wird zwischen den beiden Brechkörpern ein Brechspalt gebildet. Während des normalen Betriebseinsatzes (Normalbetrieb) wird das zu zerkleinernde mineralische Material im Brechaggregat gebrochen, bis es eine Korngröße aufweist, die klein genug ist, um das Brechaggregat durch den Brechspalt hindurch zu verlassen. Unterhalb des Brechspalts kann eine Förderrichtung vorgesehen sein, die das zerkleinerte Material aus dem Arbeitsbereich des Brechaggregats abtransportiert. Die Fördereinrichtung kann als endlos umlaufendes Förderband ausgebildet sein. Während des Betriebseinsatzes kann es nun vorkommen, dass ein nicht brechbarer oder ein schwer brechbarer Gegenstand in das Brechaggregat gelangt. Dieser Gegenstand ist dabei so groß ist, dass er nicht durch den Brechspalt hindurch abtransportiert werden kann. Dann tritt an dem Brechaggregat eine Überlastsituation ein. Diese Überlastsituation kann dazu führen, dass Komponenten des Brechers beschädigt werden. Es ist daher erforderlich, auf diese Überlastsituation zu reagieren. Bei den erfindungsgemäßen Brechern ist hierzu eine Überlast-Auslöseeinrichtung verwendet. Die Überlast-Auslöseeinrichtung weist eine bewegbare Baugruppe auf, die mit einem der beiden Brechkörper, vorzugsweise dem zweiten Brechkörper (z.B. Brechbacke oder Prallschwinge), verbunden ist. Die Überlast-Auslöseeinrichtung besitzt eine bewegliche Baugruppe mit einem Hydraulikzylinder. Beispielsweise kann der Zylinder oder der im Zylinder geführte Kolben des Hydraulikzylinders Teil der beweglichen Baugruppe der Überlast-Auslöseeinrichtung sein. Die bewegliche Baugruppe ist im Hydraulikzylinder gegen ein Fluid abgestützt, das in einem Druckraum des Hydraulikzylinders unter Druck gesetzt ist. Weiterhin weist die Überlast-Auslöseeinrichtung ein Ventil auf, das öffnet sobald, infolge einer Überlastsituation der Druck im Druckraum einen unzulässigen Schwellwert erreicht. Dann entweicht das Fluid aus dem Druckraum und der Druck im Druckraum baut sich schlagartig ab. Die bewegliche Baugruppe ist dann nicht mehr gegen den Druck abgestützt und kann sich verstellen, um den Brechpalt weit zu öffnen. Der nicht brechbare Gegenstand kann dann das Brechaggregat verlassen.

Aus EP 2 888 049 B1 ist ein Brecher bekannt, der eine Überlast-Auslöseeinrichtung aufweist. Hierbei ist ein Hydraulikzylinder verwendet, der als bewegliche Baugruppe eine Einheit aufweist, die den Kolben, die Kolbenstange und ein Koppelstück aufweist. Mit dem Koppelstück ist die bewegliche Baugruppe an eine Brechbacke des Brechaggregats angekoppelt. Der Druckraum des Hydraulikzylinders ist über eine Hydraulikleitung an einen Hydrauliktank angeschlossen. In die Hydraulikleitung ist ein Druckventil integriert. Dieses öffnet, wenn der Druck in der Druckkammer, infolge einer Überlast-Situation einen Schwellwert erreicht. Dann wird das Fluid aus der Druckkammer in den Hydrauliktank abgelassen. Es hat sich gezeigt, dass diese Art der Überlast-Absicherung dann, wenn infolge einer Überlast-Situation eine schnelle Öffnung des Brechspalts gefordert ist, zu träge ist. Das Druckventil öffnet mitunter nicht ausreichend schnell. In Folge kann ein Bauteil des Brechers, insbesondere der bewegbaren Baugruppe, Schaden nehmen.

Aus DE 10 2020 114 106 A1 ist ein weiterer Brecher mit einem speziell für eine Überlast-Absicherung ausgelegten Hydrauliksystem bekannt.

Es ist Aufgabe der Erfindung, einen Brecher der eingangs erwähnten Art bereitzustellen, der eine effiziente Absicherung des Brechaggregats vor Überlast-Situationen ermöglicht.

Diese Aufgabe wird durch den Brecher nach Anspruch 1 gelöst, der dadurch gekennzeichnet ist, dass das Ventil zwischen zwei relativ zueinander verstellbaren Bauteilen der bewegbaren Baugruppe gebildet ist.

Bei einer Überlast-Situation wird der Brechkörper, an den die bewegliche Baugruppe angeschlossen ist, ausgelenkt. Mit dieser Bewegung wird auch die bewegliche Baugruppe bewegt und beschleunigt. Da nun erfindungsgemäß das Ventil in die bewegbare Baugruppe integriert ist, kann diese Bewegung genutzt werden, um das Ventil, das zwischen zwei relativ zueinander bewegbaren Bauteilen der Baugruppe gebildet ist, zu öffnen. Erfindungsgemäß ist mithin die Öffnungsbewegung des Ventils bewegungsgesteuert, was das Ansprechverhalten und damit die Reaktionszeit bei Auftreten einer Überlast-Situation deutlich verbessert.

Gemäß einer bevorzugten Ausgestaltungsvariante der Erfindung kann es vorgesehen sein, dass die beweglichen Baugruppe den Kolben, eine mit dem Kolben gekoppelte Kolbenstange und ein Trägheitselement aufweist, dass das Trägheitselement an den Kolben oder die Kolbenstange angekoppelt ist, dass das Trägheitselement ein Teil des Ventils bildet und dass vorzugsweise das Trägheitselement mittels eines Federelements vorgespannt in der geschlossenen Ventilstellung gehalten ist. Dies ermöglicht eine einfache Bauweise, die in klassisch aufgebaute Brechaggregate einfach integriert werden kann, ohne dass hierbei aufwändige Anpassarbeiten erforderlich sind. Dabei kann es insbesondere so sein, dass die Kolbenstange aus dem Hydraulikzylinder herausgeführt und mittelbar oder unmittelbar an den abzustützenden Brechkörper angeschlossen ist. Die Bewegung des Brechkörpers führt zu einer Beschleunigung der Kolbenstange bzw. des Kolbens. Das Trägheitselement folgt dieser Bewegung nicht oder verzögert. Hierdurch entsteht eine Relativbewegung zwischen dem Trägheitselement und einer anderen Komponente, beispielsweise der Kolbenstange oder dem Kolben, der bewegbaren Baugruppe. Diese kann für die Öffnung des Ventils genutzt werden.

Alternativ ist es auch denkbar, dass wenn die bewegbare Baugruppe den Zylinder des Hydraulikzylinders umfasst, und dass dann das Trägheitselement an den Zylinder angekoppelt ist.

Wenn vorgesehen ist, dass das Trägheitselement mittels eines Federelements vorgespannt in der geschlossenen Ventilstellung gehalten ist, dann ist eine sichere Betriebsweise möglich. Mit dem Federelement kann dann auch der Ventildruck, also der Druck mit dem die das Ventil bildenden Bauteile aneinander gehalten werden, eingestellt werden. Insbesondere kann das Ventil dann unter Einwirkung der Federvorspannung zuverlässig in der Schließstellung gehalten werden. Im Überlastfall ergibt sich eine trennende Kraft zwischen dem Trägheitselement und dem am Trägheitselement anliegenden Bauteil der bewegbaren Baugruppe. Diese ergibt sich aus der Beschleunigung der gegenüber dem Trägheitselement bewegten Einheit multipliziert mit deren Masse und abzüglich der Federvorspannung und einer möglichen Dichtungsreibung. Ist diese Kraft positiv, öffnet sich der Ventilsitz und das Fluid kann aus der Druckkammer entweichen.

Für eine exakte Ventilfunktion kann es vorgesehen sein, dass das Trägheitselement einen oder mehrere Führungsabschnitte aufweist mittels derer es innerhalb des Zylinders zwischen der Öffnungs- und der Schließstellung des Ventils verstellbar geführt ist.

Wenn vorgesehen ist, dass die fluidleitende Verbindung zwischen dem Druckraum und dem Ausgleichsbereich innerhalb des Zylinders verläuft, dann ergibt sich eine einfache Konstruktion, die mit geringem Montageaufwand in einem Brecher installiert werden kann.

Wenn vorgesehen ist, dass das Trägheitselement von einem Trägheitskolben gebildet ist, der ebenso wie der Kolben im Zylinder geführt ist, dann kann auf einfache Weise das Ventil, beispielsweise zwischen dem Kolben und dem Trägheitskolben, ausgebildet werden.

Wenn vorgesehen ist, dass die Kolbenstange durch den Ausgleichsbereich hindurch in die Umgebung geleitet ist, und dass die fluidleitende Verbindung zwischen dem Druckraum und dem Ausgleichsbereich einen Ableitkanal aufweist, der von dem Kolben gebildet ist, und/oder dass die fluidleitende Verbindung eine Fluidführung aufweist, die von dem Trägheitselement gebildet ist, dann lässt sich auf einfache Weise eine robuste Bauweise schaffen. Besonders vorteilhaft ist dabei die fluidleitende Verbindung zumindest bereichsweise geschützt vor mechanischen Einwirkungen innerhalb des Zylinders angeordnet.

Es hat sich gezeigt, dass die Überlast-Auslösesicherung besonders effektiv dann wirkt, wenn vorgesehen ist, dass der Trägheitskolben ein Dichtstück und der Kolben einen Ventilsitz aufweist, dass das Dichtstück und der Ventilsitz Teile des Ventils bilden, und dass in der Schließstellung des Ventils das Dichtstück auf dem Ventilsitz aufsitzt, um die Verbindung zwischen dem Druckraum und dem Ausgleichsbereich zu sperren.

Ein erfindungsgemäßer Brecher kann auch dadurch gekennzeichnet sein, dass der Trägheitskolben eine Schraubaufnahme aufweist, in die eine Befestigungsschraube eingeführt und in eine Gewindeaufnahme des Kolbens eingeschraubt ist, wobei die Mittellängsachse der Befestigungsschraube in Richtung der Längsachse des Zylinders verläuft, dass auf die Befestigungsschraube ein/das Federelement einwirkt, welches in der Schließstellung den Trägheitskolben gegenüber dem Kolben verspannt, und dass der Trägheitskolben unter Vergrößerung der Vorspannung des Federelements relativ zu dem Kolben von der Schließstellung in die Öffnungsstellung des Ventils verstellbar gelagert ist.

Eine stabile Bauweise zur Übertragung großer Kräfte kann auf einfache Weise derart ausgeführt sein, dass der Kolben einen Kolbenboden aufweist, an den sich ein Befestigungsstück anschließt, dass die Kolbenstange einen Befestigungsansatz aufweist, der mit dem Befestigungsstück verbunden ist und dass zwischen der Kolbenstange und dem Befestigungsstück ein Überströmbereich der fluidleitenden Verbindung zwischen dem Druckraum und dem Ausgleichsbereich gebildet ist.

Für die Abführung der Ölmenge, die im Überlastfall vom Ausgleichsbereich nicht mehr aufgenommen werden kann sowie zur Druckabsicherung des Ausgleichsbereichs im Normalbetrieb des Brechers kann es vorgesehen sein, dass der Ausgleichsbereich über eine Druckleitung an ein Druckventil angeschlossen ist. Dabei lässt sich das Hydraulikfluid nach dem Auftreten einer Überlastsituation dann geordnet ableiten, wenn vorgesehen ist, dass im Anschluss an das Druckventil eine Hydraulikleitung zu einem Tank geführt ist, und dass das Druckventil öffnet, nachdem das Ventil infolge einer Überlastsituation am Brechaggregat ausgelöst hat, um Hydraulikfluid von dem Ausgleichsbereich in den Tank abzuleiten.

Nach einem Überlastfall kann der Brechspalt auf einfache Weise wieder eingestellt werden, wenn vorgesehen ist, dass der Druckraum ein Anschlussstück mit einem Hydraulikanschluss aufweist, dass der Druckraum über den Hydraulikanschluss mit einem Druckerzeuger in Verbindung steht, und dass mittels des Druckerzeugers über den Hydraulikanschluss Hydraulikflüssigkeit in den Druckraum geleitet werden kann, um das Volumen des Druckraums zu vergrößern.

Die Erfindung wird im Folgenden anhand eines in den Zeichnungen dargestellten Ausführungsbeispiels näher erläutert. Es zeigen:
- Figur 1:: in perspektivischer Prinzipdarstellung ein Brechaggregat eines Rotationsprallbrechers mit angeschlossenen Maschinenkomponenten des Brechers,
- Figuren 2 und 3:: in schematischer Darstellung das Brechaggregat gemäß Figur 1 mit einer Überlast-Auslöseeinrichtung,
- Figur 4:: in vergrößerter Detaildarstellung und im Schnitt, einen Hydraulikzylinder einer Überlast- Auslöseeinrichtung und
- Figur 5:: in schematischer Darstellung eine Integration des Hydraulikzylinders gemäß Figur 4 in ein Hydrauliksystem.

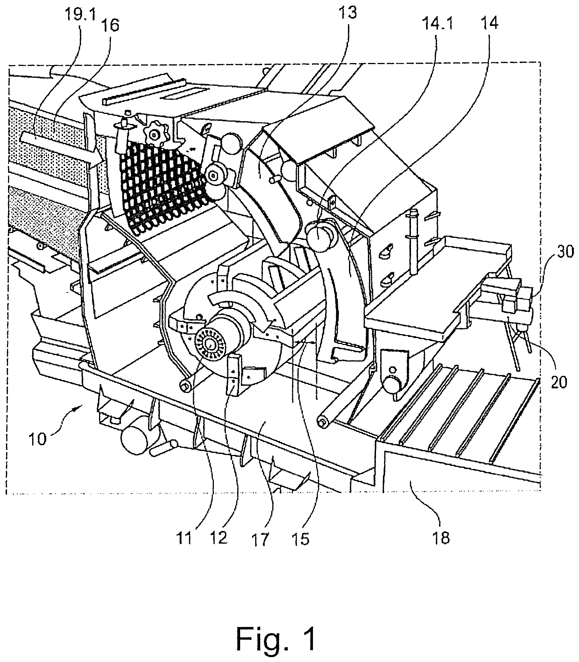

In Figur 1 ist ein Brechaggregat 10 eines Rotationsprallbrechers dargestellt. Das Brechaggregat 10 umfasst ein Brechergehäuse, in dem ein beweglicher Brechkörper 11 drehbar gelagert ist. Entsprechend ist der bewegliche Brechkörper 11 vorliegend als Rotor ausgebildet. Der Rotor trägt im Bereich seines Außenumfangs Schlagleisten 12.

Innerhalb des Brechergehäuses ist eine obere Prallschwinge 13 angeordnet. Weiterhin ist im Brechergehäuse auch ein weiterer Brechkörper 14 angeordnet, der vorliegend eine untere Prallschwinge bildet.

Zwischen dem Rotor (beweglicher Brechkörper 11) und der unteren Prallschwinge (Brechkörper 14) wird ein Brechspalt 15 gebildet. Bei drehendem Rotor bilden die radial äußeren Enden der Schlagleisten 12 einen äußeren Brechkreis. Dieser Brechkreis bildet zusammen mit einer zugewandten Fläche der unteren Prallschwinge den Brechspalt 15. Die untere Prallschwinge 14 ist mittels eines Schwenklagers 14.1 schwenkbar gelagert. Über die gewählte Schwenkstellung der unteren Prallschwinge kann die Breite des Brechspalts 15 eingestellt werden.

Wie Figur 1 weiter erkennen lässt, ist dem Brechaggregat 10 eine Materialzuführung 16 zugeordnet. Über diese Materialzuführung 16 kann zu brechendes Material 19.1 in den Brechraum gefördert werden. Die Förderrichtung ist in Figur 1 mit einem Pfeil symbolisiert. Wenn das zu brechende Material 19.1 in den Bereich des Rotors gelangt, wird es mittels der Schlagleisten 12 nach außen weggeschleudert. Dabei trifft dieses Material auf die obere Prallschwinge 13 und auf die untere Prallschwinge 14. Beim Aufprall auf eine Schlagleiste oder auf die beiden Prallschwingen wird das zu zerkleinernde Material 19.1 gebrochen.

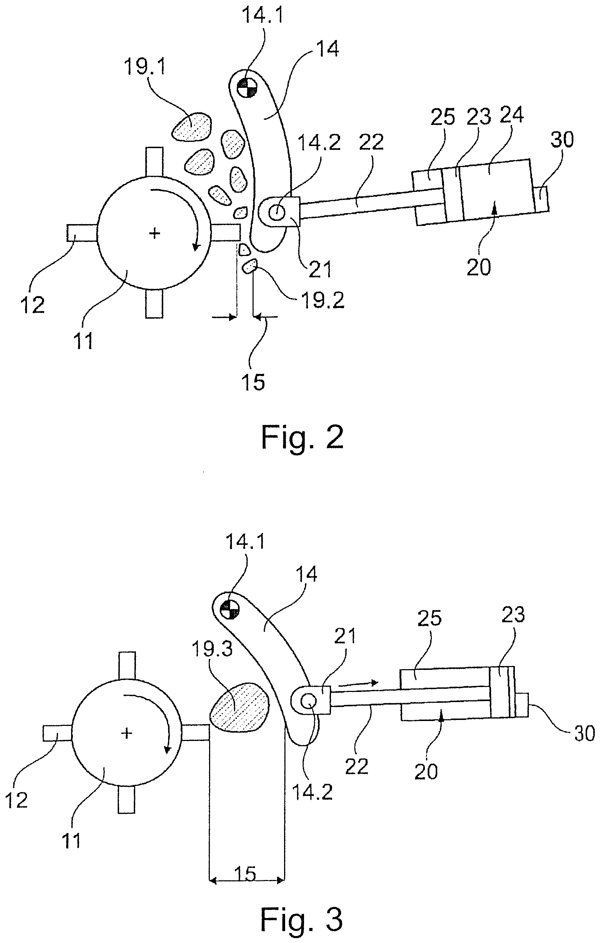

Für die untere Prallschwinge ist dies beispielhaft in den Figuren 2 und 3 näher dargestellt. Beim Auftreffen des zu brechenden Materials 19.1 auf den Brechkörper 14 entsteht gebrochenes Material 19.2, wie dies Figur 2 zeigt. Sobald dieses gebrochene Material eine Korngröße aufweist, die kleiner ist als der Brechspalt 15, fällt dieses gebrochene Material 19.2 durch den Brechspalt 15 hindurch. Es gelangt dann in einen Sammelbereich 17 unterhalb des beweglichen Brechkörpers 11 (Rotor). Wie Figur 1 zeigt, ist an den Sammelbereich 17 eine Fördereinrichtung 18 angeschlossen. Über diese Fördereinrichtung 18 kann das gebrochene Material 19.2 abtransportiert werden.

Wie Figur 2 weiter zeigt, ist der Brechkörper 14 mittels eines Hydraulikzylinders 20 gegenüber der Maschinenkonstruktion des Brechers abgestützt. Die Abstützung an der Maschinenkonstruktion, beispielsweise an dem Maschinengestell des Brechers, ist in den Zeichnungen nicht näher detailliert. Allerdings ist in Figur 1 erkennbar, dass der Hydraulikzylinder 20 geschützt im Wesentlichen außerhalb des Brechergehäuses montiert ist, in dem der Rotor aufgenommen ist.

Wie die Figuren 2 und 3 zeigen, weist der Hydraulikzylinder 20 einen Zylinder 25 auf, in dem ein Kolben 23 verstellbar geführt ist. Der Kolben 23 trägt eine Kolbenstange 22. Die Kolbenstange 22 ist an ihrem dem Kolben 23 abgewandten Ende mit einem Koppelstück 21 ausgestattet, welches ein Lagerteil 21.1 aufweist. Mittels dieses Lagerteils 21.1 ist das Koppelstück 21 an ein Lager 14.2 des Brechkörpers 14 angeschlossen. Damit ist der Hydraulikzylinder 20 schwenkbar an dem Brechkörper 14 angekoppelt. Die Koppelstelle steht im Abstand zu dem Schwenklager 14.1.

Wie Figur 2 erkennen lässt, begrenzt der Kolben 23 einen Druckraum 24 im Zylinder 25. In dem Druckraum 24 ist Hydraulikflüssigkeit, insbesondere Hydrauliköl, eingefüllt. Der Kolben 23 wird gegenüber diesem Medium abgestützt. Damit wird die Kolbenstange 22 und der Brechkörper 14 in der in Figur 2 gezeigten vorgegebenen Brechstellung gehalten.

Abhängig von der anstehenden Brechaufgabe ist es erforderlich, die Betriebsposition des Brechspalts 15 geeignet einzustellen. Hierzu weist der Brecher eine Steuerungseinrichtung auf. Wenn ausgehend von der in Figur 2 gezeigten Position der Brechspalt 15 breiter eingestellt werden soll, so wird Hydraulikflüssigkeit aus dem Druckraum 24 abgelassen. Hierdurch fährt der Kolben 23 weiter in den Zylinder 25 ein, bis der gewünschte Brechspalt 15 eingestellt ist. Wird hingegen ein engerer Brechspalt 15 gewünscht, so wird zusätzliche Hydraulikflüssigkeit in den Druckraum 24 eingefüllt. Hierdurch wird der Kolben 23 unter Vergrößerung des Druckraums 24 verstellt. Die Kolbenstange 22 fährt weiter aus dem Zylinder 25 aus. Hierdurch wird der Brechkörper 14 im Uhrzeigersinn verschwenkt, sodass sich eine Verjüngung des Brechspalts 15 ergibt.

Wie die Figuren 1 bis 3 zeigen, ist eine Überlast-Auslöseeinrichtung 30 verwendet.

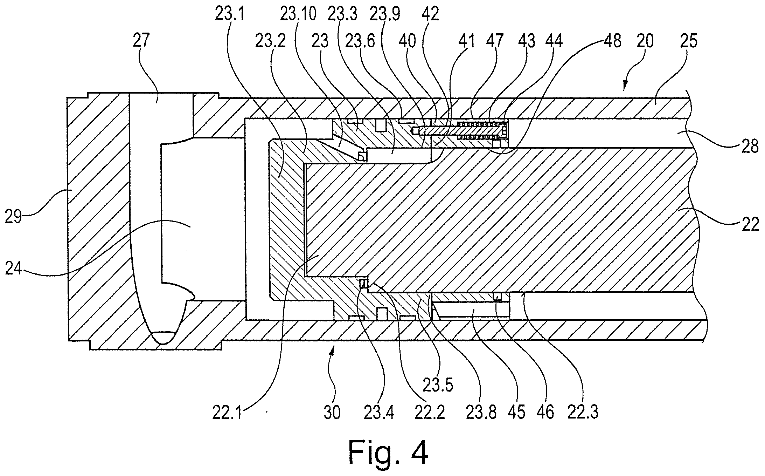

Die Überlast-Auslöseeinrichtung 30 umfasst einen Hydraulikzylinder 20, der in Figur 4 gezeigt ist. Der Hydraulikzylinder 20 besitzt einen Zylinder 25, in dem ein Kolben 23 linear verstellbar geführt ist. Innerhalb des Zylinders 25 teilt der Kolben 23 zwei Bereiche gegeneinander ab. Insbesondere ist auf der einen Seite des Kolbens 23 der Druckraum 24 und auf der gegenüberliegenden Seite des Kolbens 23 ein Ausgleichsbereich 28 gebildet.

Der Druckraum 24 wird teilweise von einem Anschlussstück 29 begrenzt, welches einen Hydraulikanschluss 27 aufweist. Das Anschlussstück 29 mit seinem Hydraulikanschluss 27 kann einteilig mit dem Zylinder 25 verbunden sein.

Der Druckraum 24 kann weiterhin von einem Kolbenboden 23.1 des Kolbens 23 begrenzt sein, wie Figur 4 zeigt.

Eine einfache Konstruktion ergibt sich dann für den Kolben 23, wenn sich an den Kolbenboden 23.1 ein Befestigungsstück 23.2 anschließt. Dabei kann es beispielsweise so sein, dass das Befestigungsstück 23.2 zur Befestigung einer Kolbenstange 22 dient, die fest mit dem Kolben 23 verbunden ist. Die Kolbenstange 22 wird durch den Ausgleichsbereich 28 hindurch abgedichtet in die Umgebung geführt.

Figur 4 zeigt, dass zur Befestigung der Kolbenstange 22 beispielsweise die Kolbenstange 22 mit einem Befestigungsansatz 22.1 ausgerüstet sein kann, die in das Befestigungsstück 23.2 eingesetzt sein kann. Dabei kann es so sein, dass zur Befestigung der Kolbenstange 22 diese an ihrem Befestigungsansatz 22.1 mit einem Außengewinde versehen ist, welches in ein Innengewinde des Befestigungsstücks 23.2 eingeschraubt ist.

Für eine axiale Abstützung der Kolbenstange 22 gegenüber dem Kolben 23 kann es vorgesehen sein, dass zwischen der Kolbenstange 22 und dem Kolben 23 eine formschlüssige Verbindung gebildet ist, die zusätzlich oder alternativ zu der oben erwähnten Gewindeverbindung vorgesehen ist. In dem in Figur 4 gezeigten Ausführungsbeispiel wird eine Formschlussverbindung zwischen der Kolbenstange 22 und dem Kolben 23 mittels eines Stützabschnitt 22.2 der Kolbenstange 22 gebildet. Dieser Stützabschnitt 22.2 liegt in Achsrichtung der Kolbenstange 22 an einer Stützschulter des Kolbens 23 formschlüssig an. Zu Dichtzwecken kann in diesem Bereich eine umlaufende Dichtungen 23.4 vorgesehen sein. Die Formschlussverbindung kann vorzugsweise so sein, dass der Kolben 23 in Richtung von dem Druckraum 24 zu dem Ausgleichsbereich 28 hin formschlüssig gegenüber der Kolbenstange 22 abgestützt ist. Wie Figur 4 zeigt, also von links nach rechts. Dadurch können hohe Drücke, die in dem Druckraum 24 auftreten über den Kolben 23 und die formschlüssige Verbindung in die Kolbenstange 22 abgetragen werden.

Gemäß einer denkbaren Ausgestaltung kann es so sein, dass der Kolben 23 einen Dichtabschnitt 23.5 aufweist, der an seiner der Kolbenstange 22 abgewandten Umfangsseite mit einer oder mehreren Kolbendichtungen 23.6 ausgerüstet ist, die den Kolben 23 umlaufend an der Innenwandung des Zylinders 25 abdichten. Dabei kann es so sein, dass der Dichtabschnitt 23.5 auf der dem Kolbenboden 23.1 abgewandten Seite des Befestigungsstück 23.2 einteilig befestigt ist.

Figur 4 zeigt weiterhin, dass in dem Innenraum des Zylinders 25, vorzugsweise in dem Ausgleichsbereich 28 ein Trägheitselement 40 angeordnet sein kann. Das Trägheitselement 40 bildet einen Teil eines Ventils 23.8. Dabei kann es so sein, dass das Trägheitselement 40 ein umlaufendes Dichtstück 41 aufweist. An diesem umlaufenden Dichtstück 41 kann ein ebenfalls umlaufender Ventilsitz 23.9 anliegen, um eine Schließstellung des Ventils 23.8 zu schaffen. Vorzugsweise kann es so sein, dass der umlaufende Ventilsitz 23.9 von dem Kolben 23 gebildet ist, wie Figur 4 zeigt. Besonders bevorzugt kann der umlaufende Ventilsitz 23.9 von dem Befestigungsstück 23.2 des Kolbens 23 gebildet sein.

Wie Figur 4 weiter veranschaulicht kann das Trägheitselement 40 vorzugsweise als Trägheitskolben ausgebildet sein. Dabei kann es so sein, dass der Trägheitskolben innerhalb des Zylinders 25 in Achsrichtung der Kolbenstange 22 begrenzt verstellbar geführt ist. Für die Führung des Trägheitskolbens kann es vorgesehen sein, dass dieser mit einem Führungsabschnitt 48 auf der Aussenkkontur der Kolbenstange 22 linear verstellbar geführt ist. Besonders bevorzugt ist es so, dass der Führungsabschnitt 48 einen Innenzylinder bildet, der auf einer zylinderförmigen Außenkontur der Kolbenstange 22 geführt ist, die somit einen Führungsabschnitt 22.3 bildet.

Zusätzlich oder alternativ kann es auch vorgesehen sein, dass der Trägheitskolben eine zylinderförmigen Außenkontur aufweist, die einen Führungsabschnitt 47 bildet. Mit diesem Führungsabschnitt 47 kann der Trägheitskolben an der zylinderförmigen Innenkontur des Zylinders 25 geführt sein.

Figur 4 veranschaulicht weiter, dass das Trägheitselement 40, vorzugsweise der Trägheitskolben relativ verstellbar zu dem Kolben 23 angeordnet ist, wobei diese Verstellung gegen die Vorspannung eines Federelements 43 erfolgen kann. Dabei kann es so sein, dass das Federelement 23 das Trägheitselement 40 in der Schließstellung des Ventils 23.8 gegen den Kolben 23 vorspannt. Insbesondere wird diese Vorspannung so übertragen, dass in der Schließstellung das Dichtstück 41 auf dem Ventilsitz 23.9 aufgepresst und hier vorgespannt gehalten ist.

Figur 4 zeigt, dass zur Verwirklichung der vorstehend beschriebenen Funktionalität beispielsweise das Trägheitselement 40 eine Schraubaufnahme 42 aufweist, durch die eine Befestigungsschraube 44 hindurchgeführt und in eine Gewindeaufnahme des Kolbens 23 eingeschraubt ist. Dabei kann es so sein, dass das Trägheitselement 40 kollinear zu der Schraubaufnahme 42 eine Federaufnahme aufweist, in die das als Spiralfeder ausgebildete Federelement 43 eingesetzt ist. Die Befestigungsschraube 44 kann dabei so gestaltet sein, dass sie mit ihrem Schraubenschaft durch den von dem Federelement 43 umgebenden Raum hindurchgeführt ist, wobei sich das Federelement 43 an dem Schraubenkopf der Befestigungsschraube 44 einerseits und auf dem Boden der Federaufnahme andererseits abgestützt, um die Vorspannung aufzubringen.

Das Trägheitselement 40 kann gegen die Vorspannung des Federelements 43 in Achsrichtung der Kolbenstange 22 verstellt werden, um das Dichtstück 41 von dem umlaufenden Ventilsitz 23.9 abzuheben und das Ventil 23.8 in die Öffnungsstellung zu bewegen.

Vorzugsweise kann es so sein, dass mehrere Befestigungsschrauben 44 mit Federelementen 43 zur Befestigung des Trägheitselement 40 an dem Kolben 23 vorgesehen sind, wobei diese Befestigungsschrauben 44 bzw. die Federelemente 43 in Umfangsrichtung des Trägheitselements 40 gleichmäßig verteilt angeordnet sind.

Figur 4 veranschaulicht, dass der Kolben 23 wenigstens einen Ableitkanal 23.10 aufweist, der eine räumliche Verbindung zwischen der Druckkammer 24 und einem Überströmbereich 23.3 bildet. Vorzugsweise ist es so, dass der Überströmbereich 23.3 zwischen dem Teil des Druckraums 24, welcher von dem Kolbenboden 23.1 begrenzt ist und dem Ausgleichsbereich 28 angeordnet ist, wie Figur 4 zeigt. Besonders bevorzugt ist es so, dass der Überströmbereich 23.3 zwischen der Außenkontur der Kolbenstange 22 und einer Innenkontur des Kolbens 23, vorzugsweise der Innenkontur des Befestigungsstück 23.2, begrenzt ist.

Figur 4 veranschaulicht weiterhin, dass das Trägheitselement 40, vorzugsweise der Trägheitskolben, zumindest eine Rückführung 45 aufweist, die derart angeordnet ist, dass eine räumliche Verbindung zwischen dem Überströmbereich 23.3 und dem Ausgleichsbereich 28 entsteht, wenn das Ventil 23.8 geöffnet ist.

Im montierten Zustand ist der Zylinder 25 vorzugsweise so montiert, dass er in Achsrichtung der Kolbenstange 22 unverstellbar gehalten ist. Denkbar ist allerdings, dass der Zylinder 25 schwenkbar montiert ist.

Die Kolbenstange 22, das Trägheitselement 40, insbesondere der Trägheitskolben, und der Kolben 23 bilden eine bewegbare Baugruppe. Wie dies oben erläutert wurde, kann diese bewegbare Baugruppe mittels des Koppelstücks 21 an den Brechkörper 14, beispielsweise eine Prallschwinge oder Brechbacke, angekoppelt werden.

Nachfolgend wird die Funktion des Hydraulikzylinders 20 näher erläutert. Zur Einstellung des Brechspalts 15 zwischen den beiden Brechkörpern 11 und 14 wird das in der Druckkammer 24 gehaltene Hydraulikfluid unter Druck gesetzt, bis die gewünschte Brechspalt-Breite eingestellt ist. Hierbei wird gleichzeitig das in dem Ausgleichsbereich 28 gehaltene Hydraulikfluid, welches ebenfalls unter Druck gesetzt ist abgelassen, bis die gewünschte Brechspalt-Breite erreicht und der Kolben 23 eine entsprechende Position eingenommen hat.

Ist der Brechspalt 15 eingestellt, so kann der Brecher im Normalbetrieb arbeiten und das ihm zugeführte zu brechende Material 19.1 zerkleinern, um das gewünschte gebrochene Material 19.2 zu erhalten.

Tritt nun ein Überlastfall auf, weil beispielsweise ein nicht brechbarer Gegenstand 19.3 oder ein schwer brechbarer Gegenstand in den Arbeitsbereich zwischen den beiden Brechkörpern 11,14 gelangt, so wird schlagartig eine hohe Kraft in den Brechkörper 14 eingebracht. Infolge dieser Kraft weicht der Brechkörper 14 aus, beispielsweise schwenkt er um die Achse des Schwenklagers 14.1.

Diese Bewegung wird über die bewegbare Baugruppe an den Hydraulikzylinder 30 übertragen. Im vorliegenden Beispiel ist es dabei so, dass diese Bewegung über die Kolbenstange 22 in den Kolben 23 übertragen wird. Dabei wird in dem Druckraum 24 das Hydraulikmedium komprimiert.

Da nun die Kolbenstange 23 infolge dieser Bewegung beschleunigt wird, entsteht aufgrund der Trägheitskraft die auf das Trägheitselement 40 einwirkt eine Relativbewegung zwischen dem Kolben 23 und dem Trägheitselement 40. Diese Relativbewegung führt dazu, dass die Vorspannung des oder der Federelemente 43 vergrößert und dass Ventil 23.8 geöffnet wird. Im Einzelnen hebt dann das Dichtstück 41 von dem Ventilsitz 23.9 ab.

Auf diese Weise wird eine fluidleitende Verbindung von der Druckkammer 24 über den Ableitkanal 23.10 und den Überströmbereich 23.3 sowie die Fluidführung 45 des Trägheitselement 40 zu dem Ausgleichsbereich 28 geschaffen. Entsprechend kann sich der Druck in dem Druckraum 24 über diese fluidleitende Verbindung schlagartig hin zum Ausgleichsbereich 28 abbauen. Infolge öffnet der Brechspalt 15 rasch, da sich die Kolbenstange 22 nun mit geringem Kraftaufwand weiter in Richtung zu der Druckkammer 24 verschieben kann. Infolgedessen kann der nicht brechbare Gegenstand 13.3 durch den Brechspalt 15 hindurchfallen.

Nach Beendigung der Überlastsituation kann, wie oben beschrieben die gewünschte Breite des Brechspalts 15 wieder eingestellt werden.

Die Steuerung des Ventils 23.8 erfolgt nunmehr gemäß der Erfindung über die Bewegung der bewegbaren Baugruppe, beispielsweise wie im vorliegenden Fall, über die Bewegung der Kolbenstange 22, die zu einer Relativbewegung des Kolbens gegenüber dem Trägheitselement 40 führt.

Nach Beendigung der Überlastsituation führen die Federelemente 43 oder das Federelement 43 das Trägheitselement 40 und den Kolben 23 wieder zusammen, um die Schließstellung des Ventils 23.8 herzustellen.

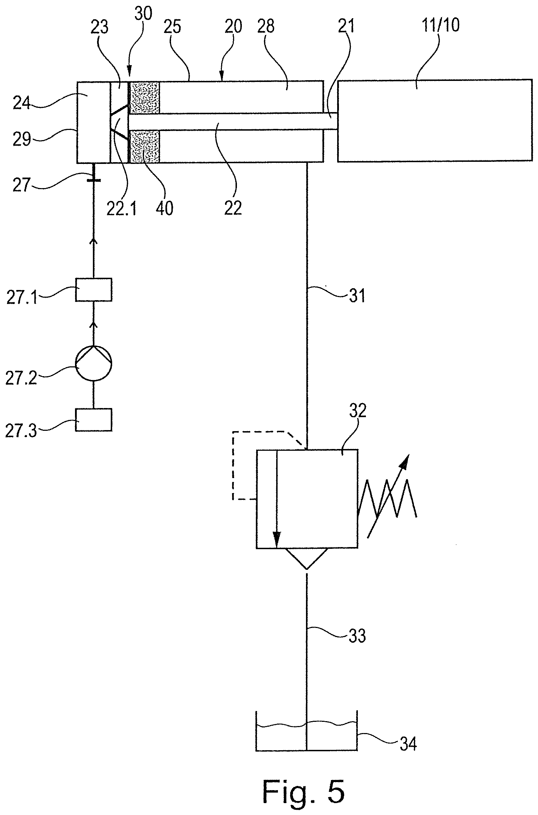

In Figur 5 ist veranschaulicht, dass der Ausgleichsbereich 28 über eine Druckleitung 31 an ein Druckventil 32 angeschlossen ist. Von dem Druckventil 32 geht eine Hydraulikleitung 33 ab, die in einen Tank 34 mündet.

Das Druckventil 32 ist so ausgebildet, dass während des Normalbetriebs dieses den Druck im Ausgleichsbereich 28 absichert und zusätzlich die beim im Überlastfall überströmende, nicht mehr aufnehmbare Ölmenge, zum Tank abführt

Wenn nun im Überlastfall der Kolben 23 verstellt und das Fluid aus dem Druckraum 24 in den Ausgleichsbereich 28 gepresst wird, so kann über das Druckventil 32 überschüssiges Hydraulikmedium aus dem Ausgleichsbereich 28 durch das Druckventil 32 abgeleitet werden. Im Einzelnen erfolgt dabei im Ausgleichsbereich 28 eine Druckerhöhung, die dazu führt, dass das Druckventil 32 geöffnet und das Hydraulikmedium in den Tank 34 abgeführt werden kann.

Figur 5 veranschaulicht auch, dass der Druckraum 24 über seinen Hydraulikanschluss an einen Druckerzeuger 27.2 angeschlossen sein kann. Mittels des Druckerzeugers 27.2 kann Hydraulikfluid aus einem Vorrat 27.3 in den Druckraum 24 gepumpt werden, um den Brechspalt 15 einzustellen. Weiterhin kann ein Druckventil 27.1 vor dem Hydraulikanschluss 27 und hinter dem Druckerzeuger 27 angeordnet sein, um den Druck im Druckraum 24 abzusichern.

Wie die vorstehenden Ausführungen veranschaulichen, betrifft die Erfindung einen Brecher für mineralische Werkstoffe oder Recyclingwerkstoffe, insbesondere einen Rotationsprallbrecher oder eine Backenbrecher, mit einem Brechaggregat 10. Das Brechaggregat 10 weist einen beweglichen ersten Brechkörper 11, insbesondere einen Rotor oder eine Brechbacke auf und dem ersten Brechkörper 11 ist ein zweiter Brechkörper 14, insbesondere eine Prallschwinge oder eine Brechbacke zugeordnet. Zwischen den Brechkörpern 11, 14 ist der Brechspalt 15 gebildet, wobei mit dem zweiten Brechkörper 14 die bewegbare Baugruppe der Überlast-Auslöseeinrichtung 30, gekoppelt ist. Die bewegbare Baugruppe weist den Zylinder 25 des Hydraulikzylinders 20 oder, wie im gezeigten Ausführungsbeispiel einen in dem Zylinder 25 geführten Kolben 23 auf, wobei die bewegbare Baugruppe dazu ausgebildet ist, in einer Ausweichbewegung eine, die Breite des Brechspalts 15 vergrößernde Bewegung des angekoppelten Brechkörpers 14 zuzulassen. Die Überlast-Auslöseeinrichtung 30 weist das Ventil 23.8 auf, das in seiner Öffnungsstellung eine fluidleitende Verbindung zwischen dem Druckraum 24 und dem Ausgleichsbereich 28 schafft und in der geschlossenen Ventilstellung diese Verbindung sperrt. Gemäß der Erfindung wird das Ventil 28.8 zwischen zwei relativ zueinander verstellbaren Bauteilen der bewegbaren Baugruppe, vorliegend zwischen dem Trägheitselement 40 und dem Kolben 23 gebildet.

## Patentansprüche

1. Brecher für mineralische Werkstoffe oder Recyclingwerkstoffe, insbesondere Rotationsprallbrecher oder Backenbrecher, mit einem Brechaggregat (10) , das einen beweglichen ersten Brechkörper (11), insbesondere einen Rotor oder eine Brechbacke aufweist, wobei dem ersten Brechkörper (11) ein zweiter Brechkörper (14), insbesondere eine Prallschwinge oder eine Brechbacke zugeordnet ist, wobei zwischen den Brechkörpern (11, 14) ein Brechspalt (15) gebildet ist, wobei mit dem ersten oder dem zweiten Brechkörper (11, 14) eine bewegbare Baugruppe einer Überlast-Auslöseeinrichtung (30) gekoppelt ist, wobei die bewegbare Baugruppe einen Zylinder (25) eines Hydraulikzylinders (20) oder einen in dem Zylinder (20) geführten Kolben (23) aufweist, wobei die bewegbare Baugruppe dazu ausgebildet ist, in einer Ausweichbewegung eine, die Breite des Brechspalts (15) vergrößernde Bewegung des angekoppelten Brechkörpers (11, 14) zuzulassen, wobei in dem Hydraulikzylinder (20) ein Druckraum (24) ausgebildet ist, der mittels des Kolbens (23) begrenzt ist, und wobei die Überlast-Auslöseeinrichtung (30) ein Ventil (23.8) aufweist, das in seiner Öffnungsstellung eine fluidleitende Verbindung zwischen dem Druckraum (24) und einem Ausgleichsbereich (28) schafft und in der geschlossenen Ventilstellung diese Verbindung sperrt,
**dadurch gekennzeichnet,**
**dass** das Ventil (28.8) zwischen zwei relativ zueinander verstellbaren Bauteilen der bewegbaren Baugruppe gebildet ist.

2. Brecher nach Anspruch 1, **dadurch gekennzeichnet, dass** die bewegliche Baugruppe den Kolben (23), eine mit dem Kolben (23) gekoppelte Kolbenstange (22) und ein Trägheitselement (40) aufweist, dass das Trägheitselement (40) an den Kolben (23) oder die Kolbenstange (22) angekoppelt ist, und das Trägheitselement (40) einen Teil des Ventils (28.8) bildet,
oder dass die bewegliche Baugruppe den Zylinder (25) und ein Trägheitselement (40) aufweist, dass das Trägheitselement (40) an den Zylinder (25) angekoppelt ist, und das Trägheitselement (40) einen Teil des Ventils (28.8) bildet,
und dass vorzugsweise das Trägheitselement (40) mittels eines Federelements (43) vorgespannt in der geschlossenen Ventilstellung gehalten ist.

3. Brecher nach Anspruch 2, **dadurch gekennzeichnet, dass** das Trägheitselement (40) einen oder mehrere Führungsabschnitte (47, 48) aufweist mittels derer es innerhalb des Zylinders (25) zwischen der Öffnungs- und der Schließstellung des Ventils (23.8) verstellbar geführt ist.

4. Brecher nach einem der vorhergehenden Ansprüche, **dadurch gekennzeichnet, dass** die fluidleitende Verbindung zwischen dem Druckraum (24) und einem Ausgleichsbereich (28) innerhalb des Zylinders (25) verläuft.

5. Brecher nach einem der Ansprüche 2 bis 4, **dadurch gekennzeichnet, dass** das Trägheitselement (40) ein Trägheitskolben ist oder dieses einen solchen aufweist, und dass der Trägheitskolben innerhalb des Aufnahmeraums des Zylinders (25) verstellbar geführt ist.

6. Brecher nach Anspruch 5, **dadurch gekennzeichnet, dass** die Kolbenstange (22) eine Führungsabschnitt (22.3) aufweist, auf dem der Trägheitskolben in Längsrichtung der Kolbenstange mit einem Führungsabschnitt (48) verschiebbar gelagert ist.

7. Brecher nach einem der vorhergehenden Ansprüche, **dadurch gekennzeichnet, dass** die Kolbenstange (22) durch den Ausgleichsbereich (28) hindurch in die Umgebung geleitet ist, und dass die fluidleitende Verbindung zwischen dem Druckraum (24) und dem Ausgleichsbereich (28) einen Ableitkanal (23.10) aufweist, der von dem Kolben (23) gebildet ist und/oder die fluidleitende Verbindung eine Fluidführung (45) aufweist, die von dem Trägheitselement (40) gebildet ist.

8. Brecher nach einem der Ansprüche 5 bis 7, **dadurch gekennzeichnet, dass** die Kolbenstange (22) eine Führungsabschnitt (22.3) aufweist, auf dem der Trägheitskolben in Längsrichtung der Kolbenstange mit einem Führungsabschnitt (48) verschiebbar gelagert ist.

9. Brecher nach Anspruch 5 bis 8, **dadurch gekennzeichnet, dass** der Trägheitskolben ein Dichtstück (41) und der Kolben (23) einen Ventilsitz (23.9) aufweist, dass das Dichtstück (41) und der Ventilsitz (23.9) Teile des Ventils (23.8) bilden, und dass in der Schließstellung des Ventils (23.8) das Dichtstück (41) auf dem Ventilsitz (23.9) aufsitzt, um die Verbindung zwischen dem Druckraum (24) und dem Ausgleichsbereich (28) zu sperren.

10. Brecher nach einem der Ansprüche 5 bis 9, **dadurch gekennzeichnet, dass** der Trägheitskolben eine Schraubaufnahme (42) aufweist, in die eine Befestigungsschraube (44) eingeführt und in eine Gewindeaufnahme des Kolbens (23) eingeschraubt ist, wobei die Mittellängsachse der Befestigungsschraube (44) in Richtung der Längsachse des Zylinders (25) verläuft, dass auf die Befestigungsschraube (44) ein/das Federelement (43) einwirkt, welches in der Schließstellung den Trägheitskolben gegenüber dem Kolben (23) verspannt, und dass der Trägheitskolben unter Vergrößerung der Vorspannung des Federelements (43) relativ zu dem Kolben (23) von der Schließstellung in die Öffnungsstellung des Ventils (23.8) verstellbar gelagert ist.

11. Brecher nach einem der vorhergehenden Ansprüche, **dadurch gekennzeichnet, dass** der Kolben (23) einen Kolbenboden (23.1) aufweist, an den sich ein Befestigungsstück (23.2) anschließt, dass die Kolbenstange (22) einen Befestigungsansatz (22.1) aufweist, der mit dem Befestigungsstück (23.2) verbunden ist und dass zwischen der Kolbenstange (22) und dem Befestigungsstück (23.2) ein Überströmbereich (23.3) der fluidleitenden Verbindung zwischen dem Druckraum (24) und dem Ausgleichsbereich (28) gebildet ist.

12. Brecher nach einem der Ansprüche 1 bis 11, **dadurch gekennzeichnet, dass** der Ausgleichsbereich (28) über eine Druckleitung (31) an ein Druckventil (32) angeschlossen ist, dass im Anschluss an das Druckventil (32) eine Hydraulikleitung (33) zu einem Tank (34) geführt ist, und dass das Druckventil (32) öffnet, nachdem das Ventil (23.8) infolge einer Überlastsituation am Brechaggregat (10) ausgelöst hat, um Hydraulikfluid von dem Ausgleichsbereich (28) in den Tank (34) abzuleiten.

13. Brecher nach einem der Ansprüche 1 bis 12, **dadurch gekennzeichnet, dass** der Druckraum (24) ein Anschlussstück (29) mit einem Hydraulikanschluß (27) aufweist, dass der Druckraum (24) über den Hydraulikanschluß (27) mit einem Druckerzeuger in Verbindung steht, und dass mittels des Druckerzeugers und den Hydraulikanschluß (27) Hydraulikflüssigkeit in den Druckraum (24) geleitet werden kann, um das Volumen des Druckraums (24) zu vergrößern.

## Claims

1. A crusher for mineral materials or recycled materials, in particular rotary impact crushers or jaw crushers, having a crusher unit (10), which has a movable first crusher body (11), in particular a rotor or a crusher jaw, wherein a second crusher body (14), in particular an impact rocker or a crusher jaw, is assigned to the first crusher body (11), wherein a crushing gap (15) is formed between the crusher bodies (11, 14), wherein a movable assembly of an overload triggering device (30) is coupled to the first or to the second crusher body (11, 14), wherein the movable assembly has a cylinder (25) of a hydraulic cylinder (20) or a piston (23) guided in the cylinder (20), wherein the movable assembly is designed to permit a motion of the coupled crusher body (11, 14) increasing the width of the crushing gap (15) in an evasive motion, wherein a pressure chamber (24) is formed in the hydraulic cylinder (20), which pressure chamber is delimited by a piston (23), and wherein the overload triggering device (30) has a valve (23.8), which, in its open position, establishes a fluid-conveying connection between the pressure chamber (24) and a compensation area (28) and, in the closed valve position, blocks this connection,
**characterized**
**in that** the valve (28.8) is formed between two components of the movable assembly that are movable relative to each other.

2. The crusher according to claim 1, **characterized in that** the movable assembly comprises the piston (23), a piston rod (22) coupled to the piston (23), and an inertia element (40), **in that** the inertia element (40) is coupled to the piston (23) or the piston rod (22), and the inertia element (40) forms part of the valve (28.8),
or that the movable assembly comprises the cylinder (25) and an inertia element (40), that the inertia element (40) is coupled to the cylinder (25), and the inertia element (40) forms part of the valve (28.8),
and **in that** the inertia element (40) is preferably held preloaded in the closed valve position by means of a spring element (43).

3. The crusher according to claim 2, **characterized in that** the inertia element (40) has one or more guide sections (47, 48) by means of which it is movably guided within the cylinder (25) between the open and the closed position of the valve (23.8).

4. The crusher according to any of the preceding claims, **characterized in that** the fluid conducting connection between the pressure chamber (24) and a compensation area (28) is routed inside the cylinder (25).

5. The crusher according to any of the claims 2 to 4, **characterized in that** the inertia element (40) is or comprises an inertia piston, and that the inertia piston is movably guided inside the receiving space of the cylinder (25).

6. The crusher according to claim 5, **characterized in that** the piston rod (22) has a guide section (22.3), on which a guide section (48) of the inertia piston is mounted for displacement in the longitudinal direction of the piston rod.

7. The crusher according to any of the preceding claims, **characterized in that** the piston rod (22) is guided through the compensation area (28) into the environment, and **in that** the fluid-conducting connection between the pressure chamber (24) and the compensation area (28) comprises a discharge channel (23.10) formed by the piston (23) and/or **in that** the fluid-conducting connection comprises a fluid guide (45) formed by the inertia element (40).

8. The crusher according to any of the claims 5 to 7, **characterized in that** the piston rod (22) has a guide section (22.3), on which a guide section (48) of the inertia piston is mounted so as to be displaceable in the longitudinal direction of the piston rod.

9. The crusher according to any of the claims 5 to 8, **characterized in that** the inertia piston has a sealing piece (41) and the piston (23) has a valve seat (23.9), **in that** the sealing piece (41) and the valve seat (23.9) form parts of the valve (23.8), and **in that** in the closed position of the valve (23.8) the sealing piece (41) is seated on the valve seat (23.9) to block the communication between the pressure chamber (24) and the compensation area (28).

10. The crusher according to any of the claims 5 to 9, **characterized in that** the inertia piston has a bolt mount (42), into which a mounting bolt (44) is inserted and bolted into a threaded mount of the piston (23), wherein the central longitudinal axis of the mounting bolt (44) extends in the direction of the longitudinal axis of the cylinder (25), **in that** a/the spring element (43) , which, in the closed position, braces the inertia piston with respect to the piston (23), acts on the mounting bolt (44), and **in that** the inertia piston is mounted in such a way that it can be moved relative to the piston (23) from the closed position into the open position of the valve (23.8) while increasing the preload of the spring element (43).

11. The crusher according to any of the preceding claims, **characterized in that** the piston (23) has a piston crown (23.1), which is adjoined by a securing piece (23.2), **in that** the piston rod (22) has a mounting neck (22.1), which is connected to the securing piece (23.2), and **in that** an overflow area (23.3) of the fluid-conducting connection between the pressure chamber (24) and the compensation area (28) is formed between the piston rod (22) and the securing piece (23.2).

12. The crusher according to any of the claims 1 to 11, **characterized in that** the compensation area (28) is connected to a pressure valve (32) via a pressure line (31), that a hydraulic line (33) is led to a tank (34) in connection to the pressure valve (32), and that the pressure valve (32) opens after the valve (23.8) has been triggered as a result of an overload situation at the crusher unit (10) in order to discharge hydraulic fluid from the compensation area (28) into the tank (34).

13. The crusher according to any of the claims 1 to 12, **characterized in that** the pressure chamber (24) comprises a connecting piece (29) with a hydraulic connection (27), **in that** the pressure chamber (24) is connected to a pressure generator via the hydraulic port (27), and that by means of the pressure generator and the hydraulic port (27) hydraulic fluid can be fed into the pressure chamber (24) in order to increase the volume of the pressure chamber (24).

## Revendications

1. Concasseur pour matériaux minéraux ou matériaux de recyclage, en particulier concasseur rotatif à percussion ou concasseur à mâchoires, avec un ensemble de concassage (10), qui présente un premier corps de concassage (11) mobile, en particulier un rotor ou une mâchoire de concassage, un deuxième corps de concassage (14), en particulier un bras oscillant à impact ou une mâchoire de concassage, étant associé au premier corps de concassage (11), une fente de concassage (15) étant formée entre les corps de concassage (11, 14), un ensemble mobile d'un dispositif de déclenchement de surcharge (30) étant couplé au premier ou au deuxième corps de concassage (11, 14), l'ensemble mobile comprenant un cylindre (25) d'un vérin hydraulique (20) ou un piston (23) guidé dans le cylindre (20), l'ensemble mobile étant conçu pour permettre, dans un mouvement d'évitement, un mouvement du corps de concassage (11, 14) couplé, augmentant la largeur de la fente de concassage (15), une chambre de pression (24) étant formée dans le vérin hydraulique (20), laquelle est délimitée au moyen du piston (23), et le dispositif de déclenchement de surcharge (30) présentant une valve (23.8) qui, dans sa position d'ouverture, crée une liaison de conduction de fluide entre la chambre de pression (24) et une zone de compensation (28) et qui, dans la position de fermeture de la valve, bloque cette liaison,
**caractérisé**
**en ce que** la valve (28.8) est formée entre deux éléments de l'ensemble mobile pouvant être déplacés l'un par rapport à l'autre.

2. Concasseur selon la revendication 1, **caractérisé en ce que** l'ensemble mobile comprend le piston (23), une tige de piston (22) couplée au piston (23) et un élément d'inertie (40), **en ce que** l'élément d'inertie (40) est couplé au piston (23) ou à la tige de piston (22), et l'élément d'inertie (40) forme une partie de la valve (28.8), ou **en ce que** l'ensemble mobile comprend le cylindre (25) et un élément d'inertie (40), **en ce que** l'élément d'inertie (40) est couplé au cylindre (25), et l'élément d'inertie (40) forme une partie de la valve (28.8), et **en ce que**, de préférence, l'élément d'inertie (40) est maintenu précontraint dans la position de fermeture de la valve au moyen d'un élément de ressort (43).

3. Concasseur selon la revendication 2, **caractérisé en ce que** l'élément d'inertie (40) présente une ou plusieurs sections de guidage (47, 48) au moyen desquelles il est guidé de manière déplaçable à l'intérieur du cylindre (25) entre la position d'ouverture et la position de fermeture de la valve (23.8).

4. Concasseur selon l'une quelconque des revendications précédentes, **caractérisé en ce que** la liaison de conduction de fluide entre la chambre de pression (24) et une zone de compensation (28) s'étend à l'intérieur du cylindre (25).

5. Concasseur selon l'une des revendications 2 à 4, **caractérisé en ce que** l'élément d'inertie (40) est un piston d'inertie ou celui-ci comporte un tel piston, et **en ce que** le piston d'inertie est guidé de manière déplaçable à l'intérieur de l'espace de logement du cylindre (25).

6. Concasseur selon la revendication 5, **caractérisé en ce que** la tige de piston (22) présente une section de guidage (22.3) sur laquelle le piston d'inertie est logé de manière à pouvoir coulisser dans le sens longitudinal de la tige de piston avec une section de guidage (48).

7. Concasseur selon l'une des revendications précédentes, **caractérisé en ce que** la tige de piston (22) est dirigée vers l'environnement à travers la zone de compensation (28), et **en ce que** la liaison de conduction de fluide entre la chambre de pression (24) et la zone de compensation (28) présente un canal de dérivation (23.10) qui est formé par le piston (23). et/ou la liaison de conduction de fluide présente un guide de fluide (45) qui est formé par l'élément d'inertie (40).

8. Concasseur selon l'une des revendications 5 à 7, **caractérisé en ce que** la tige de piston (22) comporte une section de guidage (22.3) sur laquelle le piston d'inertie est monté coulissant dans la direction longitudinale de la tige de piston avec une section de guidage (48).

9. Concasseur selon les revendications 5 à 8, **caractérisé en ce que** le piston d'inertie présente une pièce d'étanchéité (41) et le piston (23) un siège de valve (23.9), **en ce que** la pièce d'étanchéité (41) et le siège de valve (23.9) constituent des parties de la valve (23.8), et **en ce que**, dans la position de fermeture de la valve (23.8), la pièce d'étanchéité (41) repose sur le siège de valve (23.9) afin de bloquer la liaison entre la chambre de pression (24) et la zone de compensation (28).

10. Concasseur selon l'une des revendications 5 à 9, **caractérisé en ce que** le piston d'inertie présente un logement de vis (42) dans lequel une vis de fixation (44) est introduite et vissée dans un logement fileté du piston (23), l'axe longitudinal médian de la vis de fixation (44) s'étendant en direction de l'axe longitudinal du cylindre (25), **en ce qu'**un/l'élément de ressort (43) agit sur la vis de fixation (44), lequel serre le piston d'inertie par rapport au piston (23) dans la position de fermeture, et **en ce que** le piston d'inertie est monté de manière déplaçable de la position de fermeture à la position d'ouverture de la valve (23.8) en augmentant la précontrainte de l'élément de ressort (43) par rapport au piston (23).

11. Concasseur selon l'une des revendications précédentes, **caractérisé en ce que** le piston (23) présente une tête de piston (23.1) à laquelle se rattache une pièce de fixation (23.2), **en ce que** la tige de piston (22) présente un épaulement de fixation (22.1) qui est relié à la pièce de fixation (23.2) et **en ce qu'**entre la tige de piston (22) et la pièce de fixation (23.2) est formée une zone de débordement (23.3) de la liaison de conduction de fluide entre la chambre de pression (24) et la zone de compensation (28).

12. Concasseur selon l'une des revendications 1 à 11, **caractérisé en ce que** la zone de compensation (28) est raccordée à une valve de pression (32) par une conduite de pression (31), **en ce que**, à la suite de la valve de pression (32), une conduite hydraulique (33) est amenée à un réservoir (34), et **en ce que** la valve de pression (32) s'ouvre après que la valve (23.8) s'est déclenchée à la suite d'une situation de surcharge sur l'ensemble de concassage (10), afin d'évacuer le fluide hydraulique de la zone de compensation (28) dans le réservoir (34).

13. Concasseur selon l'une des revendications 1 à 12, **caractérisé en ce que** la chambre de pression (24) comporte une pièce de raccordement (29) avec un raccord hydraulique (27), **en ce que** la chambre de pression (24) est reliée à un générateur de pression par l'intermédiaire du raccord hydraulique (27), et **en ce que**, au moyen du générateur de pression et du raccord hydraulique (27), du liquide hydraulique peut être acheminé dans la chambre de pression (24) afin d'augmenter le volume de la chambre de pression (24).
